# EUROPEAN PATENT APPLICATION

(11) **EP 2 824 626 A1**
(43) Date of publication of application: **14.01.2015**
(21) Application number: 12870536.5
(22) Date of filing: 09.03.2012
(51) Int. Cl.: G06Q 20/06

(54) **TRANSACTION SYSTEM, TRANSACTION ASSISTANCE DEVICE, AND USER DEVICE**

(71) Applicant: Quadrac Co., Ltd., Shibuya-ku Tokyo 150-0022 (JP)
(72) Inventor: KUSAKABE, Susumu, Tokyo 150-0022 (JP)
(74) Representative: Hoffmann Eitle
(86) International application number: PCT/JP2012/056166
(87) International publication number: WO 2013/132659

(57) **Abstract**

A transaction system and the like are provided which allow electronic money to be utilized according to a simpler procedure than systems of prior art. The transaction system includes a user apparatus and a transaction support apparatus connected via a network. The user apparatus includes: means for, upon receiving a request for transmission of electronic money from a transaction apparatus connected to the user apparatus via short-range radio communication, transferring the received request for transmission to the transaction support apparatus; and means for, upon receiving electronic money from the transaction support apparatus, transferring the received electronic money to the transaction apparatus. The transaction support apparatus includes: means for storing electronic money; and means for, when the request for transmission of electronic money is transferred from the user apparatus to the transaction support apparatus, transmitting the stored electronic money to the user apparatus in accordance with the request for transmission.

## Description

### TECHNICAL FIELD

The present invention relates to transactions using electronic money.

### BACKGROUND

For mobile communication devices incorporating an IC card with telephone communication means, a mobile communication device has been proposed which includes IC card communication means with which the IC card and an external information communication source transmit and receive information to and from each other (see Patent Document 1).

According to Patent Document 1, in this mobile communication device, a storage area in the IC card is divided into a plurality of areas a1, a2.... For example, the area a1 is an information storage area for a cellular phone, and the area a2 and subsequent areas are information areas for various noncontact IC cards.

To allow the mobile communication device to function as a noncontact IC card, a keyboard is operated to input predetermined data so that a CPU in the mobile communication device can select a storage area in the IC card which is allowed to function as the corresponding noncontact IC card. To allow the mobile communication device to function as another noncontact IC card, another predetermined data is input so that the CPU in the mobile communication device can select a storage area for the corresponding IC card.

Patent Document 1 states that the mobile communication device eliminates the need to have many types of cards for respective applications and enables the functions of different types of noncontact IC cards to be accomplished using simple keyboard operations.

Patent Document 1: Japanese Patent Application Laid-open No. 2001-223631

### SUMMARY OF INVENTION

However, in recent years, a variety of operators have operated various types of electronic money, and thus, disadvantageously, to adequately use the electronic money and make smooth transactions, a large number of applications need to be pre-installed in the mobile communication device to constantly monitor the mobile communication device to check whether the device is charged with sufficient amounts of electronic money.

Thus, an object of the present invention is to provide a transaction system, a transaction support apparatus, and a user apparatus all of which allow electronic money to be utilized according to a simpler procedure than conventional techniques.

According to the present invention, the object is accomplished by the following means.

The present invention is a transaction system in which a user apparatus and a transaction support apparatus are connected via a network, wherein the user apparatus has: means for, upon receiving a request for transmission of electronic money from a transaction apparatus connected to the user apparatus via short-range radio communication, transferring the received request for transmission to the transaction support apparatus; and means for, upon receiving electronic money from the transaction support apparatus, transferring the received electronic money to the transaction apparatus, and the transaction support apparatus has: means for storing electronic money; and means for, when the request for transmission of electronic money is transferred from the user apparatus to the transaction support apparatus, transmitting the stored electronic money to the user apparatus in accordance with the request for transmission.

Furthermore, the present invention is a transaction support apparatus connected via a network to a user apparatus including means for, upon receiving a request for transmission of electronic money from a transaction apparatus connected to the user apparatus via short-range radio communication, transferring the received request for transmission to the transaction support apparatus, and means for, upon receiving electronic money, transferring the received electronic money to the transaction apparatus, the transaction support apparatus including: means for storing electronic money; and means for, when the request for transmission of electronic money is transferred from the user apparatus to the transaction support apparatus, transmitting the stored electronic money to the user apparatus in accordance with the request for transmission.

Furthermore, the present invention is a user apparatus connected via a network to a transaction support apparatus including means for storing electronic money and means for, when a request for transmission of electronic money is transferred to the transaction support apparatus, transmitting the stored electronic money to the user apparatus in accordance with the request for transmission, the user apparatus including: means for, upon receiving a request for transmission of electronic money from a transaction apparatus connected to the user apparatus via short-range radio communication, transferring the received request for transmission to the transaction support apparatus; and means for, upon receiving electronic money from the transaction support apparatus, transferring the received electronic money to the transaction apparatus.

The present invention can provide a transaction system, a transaction support apparatus, and a user apparatus all of which allow electronic money to be utilized according to a simpler procedure than the conventional techniques.

### BRIEF DESCRIPTION OF THE DRAWING

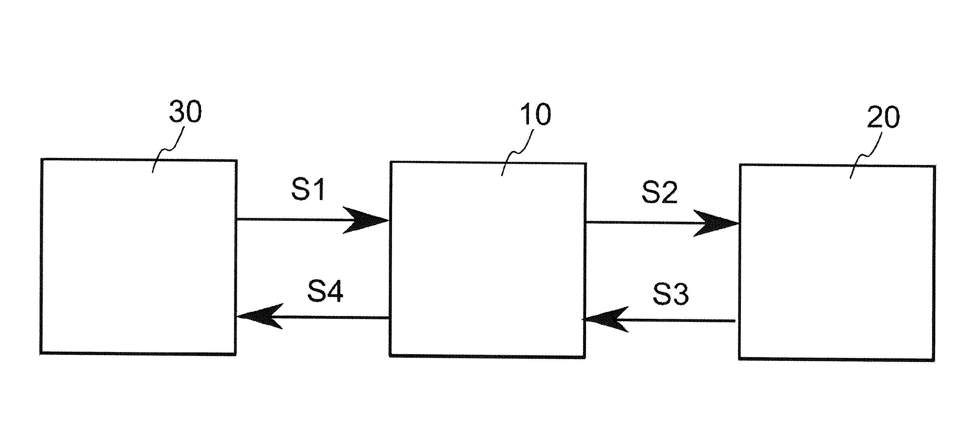

Fig. 1 is a diagram showing a general configuration of a transaction system according to an embodiment of the present invention.

### DESCRIPTION OF EMBODIMENTS

An embodiment of the present invention will be described below with reference to the drawings. In the specification, transmissions and receptions of data unrelated to understanding of the present invention are appropriately omitted. Before or after transmission or reception or between transmission and reception, processing such as polling, mutual authentication, check of an application, and check of balance of electronic money can be appropriately executed.

Fig. 1 is a diagram showing an example of a general configuration of a transaction system according to an embodiment of the present invention.

As shown in Fig. 1, the transaction system according to the embodiment of the present invention is a system in which a user apparatus 10 and a transaction support apparatus 20 are connected via a network.

The user apparatus 10 is an apparatus used by a user. The user apparatus 10 may be, for example, a cellular phone or a smart phone. The user apparatus 10 is connected to a transaction apparatus 30 via short-range radio communication in accordance with standards as represented by the NFC (Near Field Communication).

The transaction apparatus 30 is an apparatus installed in stores (example: a supermarket or a restaurant) where electronic money (prepaid or postpaid electronic money or electronic point data utilized for a loyalty program) is usable.

The transaction support apparatus 20 may be, for example, a server computer.

Operation of the transaction system according to the embodiment of the present invention will be outlined below.

First, the transaction apparatus 30 transmits a request for transmission of electronic money to the user's user apparatus 10 connected to the transaction apparatus 30 via short-range radio communication when, for example, the user purchases a product or receives service (step S1) at stores where electronic money is usable. In transmitting the request for transmission of electronic money to the user apparatus 10, the transaction apparatus 30 executes processing such as encryption on the request for transmission in accordance with electronic money standards.

Upon receiving the request for transmission of electronic money from the transaction apparatus 30 connected to the user apparatus 10 via short-range radio communication, the user apparatus 10 transfers the received request for transmission to the transaction support apparatus 20 (step S2).

More specifically, the user apparatus 10, for example, takes a portion other than a payload portion from the received packet of the request for transmission, attaches to the payload portion predetermined data (for example, a head and a tailer) complying with a protocol (for example, TCP/IP) agreed on between the user apparatus 10 and the transaction support apparatus 20, and transmits it to the transaction support apparatus 20. Thus, the user apparatus 10 need not execute processing complying with the electronic money standards (such as update of the balance, encryption, and decryption) on the request for transmission of electronic money received from the transaction apparatus 30.

The transaction support apparatus 20 includes means for storing electronic money. When the request for transmission of electronic money is transferred from the user apparatus 10 to the transaction support apparatus 20, the transaction support apparatus 20 executes processing complying with the electronic money standards such as decryption on the received request for transmission and transmits electronic money to the user apparatus 10 in accordance with the request for transmission (step S3). In transmitting the electronic money to the user apparatus 10, the transaction support apparatus 20 executes processing complying with the electronic money standards such as encryption on the electronic money.

The transaction support apparatus 20 can transmit electronic money under the condition according to which the user of the user apparatus 10 has paid the transaction support apparatus 20 consideration complying with the received request for transmission. In this case, for example, the consideration can be paid preliminarily or for every transaction using online banking or a credit card.

Upon receiving electronic money from the transaction support apparatus 20, the user apparatus 10 transfers the received electronic money to the transaction apparatus 10 (step S4).

More specifically, the user apparatus 10, for example, takes a portion other than a payload portion from the received packet of the request for transmission, attaches to the payload portion predetermined data (for example, a head and a tailer) complying with a protocol (for example, the NFC protocol) agreed on between the user apparatus 10 and the transaction apparatus 30, and transmits it to the transaction apparatus 30. Thus, the user apparatus 10 need not execute processing, which complies with the electronic money standards (such as update of the balance, encryption, and decryption), on the electronic money received from the transaction support apparatus 20.

The user apparatus 10 can determine whether or not to transfer the received electronic money to the transaction apparatus 30, based on, for example, a previously set setting file. Thus, the user of the user apparatus 10 can make the final decision for the transaction at the user's own discretion rather than at another person's discretion.

Setting in the setting file may be such that, for example, the electronic money is transferred automatically if the electronic money is equal to or smaller than a predetermined amount or transferred when the user accepts the transfer by operating the relevant button if the electronic money exceeds the predetermined amount. For the user's button operation, password authentication, fingerprint authentication, or the like may be performed.

Upon receiving the electronic money from the user apparatus 10, the transaction apparatus 30 executes processing complying with the electronic money standards such as encryption on the received electronic money to acquire the electronic money.

In the transaction system according to the above-described embodiment of the present invention, the request for transmission of electronic money transmitted from the transaction apparatus 30 to the user apparatus 10 is transferred from the user apparatus 10 to the transaction support apparatus 20, and the electronic money transmitted from the transaction support apparatus 20 to the user apparatus 10 is transferred from the user apparatus 10 to the transaction apparatus 30. Thus, exchange of the electronic money is processed substantially between the transaction support apparatus 20 and the transaction apparatus 30.

Thus, the transaction system according to the embodiment of the present invention eliminates the need to execute processing complying with the electronic money standards (such as update of the balance, encryption, and decryption) by the user apparatus 10. Consequently, the user of the user apparatus 10 need not have the user apparatus 10 store the balance of the electronic money, an encryption key, and the like. Therefore, the transaction system according to the embodiment of the present invention allows electronic money to be utilized according to a simpler procedure than the conventional techniques.

In particular, the transaction system according to the embodiment of the present invention eliminates the need to store for every operation the balances of various types of electronic money complying with different standards and encryption keys. This significantly facilitates selection of the optimum one of various types of electronic money depending on the situation.

Furthermore, the user of the user apparatus 10 can conventionally perform transactions using electronic money only with an online transaction apparatus (a transaction apparatus directly connected to a network). However, in the transaction system according to the embodiment of the present invention, the transaction apparatus 30 can communicate with the transaction support apparatus 20 via the user apparatus 10. Thus, the user of the user apparatus 10 can perform transactions using electronic money even with an offline transaction apparatus 30 (the transaction apparatus 30 not directly connected to the network).

The embodiment of the present invention has been described. However, these descriptions relate to an example of the present invention. The descriptions have no limitation on the present invention.

### EXPLANATION OF REFERENCE NUMERALS

- 10: User apparatus
- 20: Transaction support apparatus
- 30: Transaction apparatus

## Claims

1. A transaction system in which a user apparatus and a transaction support apparatus are connected via a network, wherein
the user apparatus has:
means for, upon receiving a request for transmission of electronic money from a transaction apparatus connected to the user apparatus via short-range radio communication, transferring the received request for transmission to the transaction support apparatus; and
means for, upon receiving electronic money from the transaction support apparatus, transferring the received electronic money to the transaction apparatus, and
the transaction support apparatus has:
means for storing electronic money; and
means for, when the request for transmission of electronic money is transferred from the user apparatus to the transaction support apparatus, transmitting the stored electronic money to the user apparatus in accordance with the request for transmission.

2. A transaction support apparatus connected via a network to a user apparatus including means for, upon receiving a request for transmission of electronic money from a transaction apparatus connected to the user apparatus via short-range radio communication, transferring the received request for transmission to the transaction support apparatus, and means for, upon receiving electronic money, transferring the received electronic money to the transaction apparatus,
the transaction support apparatus comprising:
means for storing electronic money; and
means for, when the request for transmission of electronic money is transferred from the user apparatus to the transaction support apparatus, transmitting the stored electronic money to the user apparatus in accordance with the request for transmission.

3. A user apparatus connected via a network to a transaction support apparatus including means for storing electronic money and means for, when a request for transmission of electronic money is transferred to the transaction support apparatus, transmitting the stored electronic money to the user apparatus in accordance with the request for transmission,
the user apparatus comprising:
means for, upon receiving the request for transmission of electronic money from a transaction apparatus connected to the user apparatus via short-range radio communication, transferring the received request for transmission to the transaction support apparatus; and
means for, upon receiving electronic money from the transaction support apparatus, transferring the received electronic money to the transaction apparatus.
